# EUROPEAN PATENT SPECIFICATION

(11) **EP 4 382 888 B1**
(45) Date of publication and mention of the grant of the patent: **12.11.2025**
(21) Application number: 22852942.6
(22) Date of filing: 28.07.2022
(51) Int. Cl.: G01N 17/00, G01N 3/34, G01N 3/20, H01M 8/04082

(54) **HYDROGEN CHARGING DEVICE AND ROTATING BENDING FATIGUE TESTING MACHINE USING SAME**
WASSERSTOFFLADEVORRICHTUNG UND ROTATIONSBIEGEERMÜDUNGSPRÜFMASCHINE UNTER VERWENDUNG DIESER FORRICHTUNG
DISPOSITIF DE CHARGE D'HYDROGÈNE ET MACHINE ASSOCIÉE DE TEST DE FATIGUE PAR FLEXION ROTATIVE

(30) Priority: 03.08.2021 JP 2021127546
(43) Date of publication of application: 12.06.2024
(73) Proprietor: Fukuoka University, Fukuoka 814-0180 (JP)
(72) Inventor: ENDO, Masahiro, Fukuoka-shi, Fukuoka 8140180 (JP); MATSUO, Takashi, Fukuoka-shi, Fukuoka 8140180 (JP)
(74) Representative: Winter, Brandl - Partnerschaft mbB
(86) International application number: PCT/JP2022/029164
(87) International publication number: WO 2023/013520

(56) References cited:
- JP-A- 2006 029 977
- JP-A- 2007 286 036
- JP-A- 2009 250 679
- JP-A- H11 183 351
- JP-U- S58 123 352
- YOSHIMOTO T ET AL: "An investigation into the frequency dependence upon the fatigue crack growth rate conducted by a novel fatigue testing method with in-situ hydrogen-charging", JOURNAL OF PHYSICS: CONFERENCE SERIES, vol. 843, 1 May 2017 (2017-05-01), GB, pages 012050, XP093208403, ISSN: 1742-6588, DOI: 10.1088/1742-6596/843/1/012050
- AKAKI Y. ET AL: "Crack size dependency of shear-mode fatigue threshold in bearing steel subjected to continuous hydrogen charging", PROCEDIA STRUCTURAL INTEGRITY, vol. 14, 1 January 2019 (2019-01-01), pages 11 - 17, XP093208424, ISSN: 2452-3216, DOI: 10.1016/j.prostr.2019.05.003

## Description

### Technical Field

The present invention relates to a device that charges hydrogen into a test specimen to evaluate hydrogen embrittlement properties of materials and a rotating bending fatigue testing machine using the same.

### Background Art

Japan is in a critical situation with a low energy self-sufficiency rate despite of its large energy consumption, and in order to resolve this situation, transformation to a decarbonized society is required. As one of the ways to realize such transformation, shifting from a carbon energy society to a hydrogen energy society is cited. In order to realize the hydrogen energy society, it is important not only to ensure hydrogen resources, but also to select materials usable in a hydrogen environment and develop new materials suitable for the hydrogen environment, and for this purpose, it is essential to establish reasonable means of investigating material strength properties.

In particular, due to the extensive testing period, it is necessary in the fatigue test, which evaluates the hydrogen embrittlement properties of a material, to continue hydrogen charging, that is, continuously supply hydrogen for exposing the material to a hydrogen environment for a long time period for performing the test.

The conventional hydrogen charging methods include the method of exposing a material to a high-pressure hydrogen gas (see Japanese Patent Laid-Open No. 2006-349487, for example), or the method of immersing a material in a hydrogen charge liquid (see Japanese Patent Laid-Open No. 2012-47540 and Japanese Patent Laid-Open No. 2016-121947, for example).

Meanwhile, concerning the fatigue testing machine for test specimens, various fatigue testing machines have been conventionally proposed, and as the one relating to the present invention, there is cited the "rotating bending testing machine" described in Japanese Patent Laid-Open No. 2009-250679, for example. The "rotating bending testing machine" has a function of performing a fatigue test by applying a torsional force while applying a bending moment to the test specimen.

T Yoshimoto and T Matsuo (J. Phys.: Conf. Ser. (2017) 843 012050) investigate the frequency dependence upon the fatigue crack growth rate conducted by a fatigue testing method with in-situ hydrogen charging.

Y. Akaki et al. (Procedia Structural Integrity 14 (2019) 11-17) describe the crack size dependency of shear-mode fatigue threshold in bearing steel subjected to continuous hydrogen charging.

JP 2009 250679 A disclose a rotation-bending test by applying torsional force to a test object while loading the test object with bending moment.

### Summary of Invention

### Technical Problem

When using the "mechanical property testing device" described in Japanese Patent Laid-Open No. 2006-349487, it is an essential requirement to supply high-pressure gas containing hydrogen stably and safely, but in order to realize this, large-scale test equipment that can reliably transport and encapsulate the high-pressure gas containing hydrogen is required, and the reality is that a huge amount of equipment cost and testing cost are expended.

Further, the "hydrogen charge method" described in each of Japanese Patent Laid-Open No. 2012-47540 and Japanese Patent Laid-Open No. 2016-121947 has the problem that since the hydrogen charging solution contacts the test specimen surface, not only the test specimen surface can corrode, but also it becomes difficult to observe the fracture origin on the test specimen surface.

On the other hand, in the "rotating bending testing machine" described in Japanese Patent Laid-Open No. 2009-250679, the test is performed by setting the test specimen after being charged with hydrogen by a predetermined hydrogen charge method, so that the hydrogen charged in the test specimen may be dissipated while the test is performed, and the properties of the test specimen may not be accurately evaluated. Such a situation tends to become more noticeable in a fatigue test with the long-term testing period.

Thus, the problem to be solved by the present invention is to provide a hydrogen charging device capable of efficiently charging hydrogen into a test specimen with a simple structure, and a rotating bending fatigue testing machine capable of appropriately evaluating hydrogen embrittlement properties of a material and rationally selecting a material usable in a hydrogen environment.

### Solution to Problem

A hydrogen charging device according to the present invention includes the features of claim 1.

In the hydrogen charging device, at least a part of the anode material can have a spiral shape with an outside diameter smaller than an inside diameter of the through-hole.

In the hydrogen charging device, at least a part of an outer periphery of the part having the spiral shape of the anode material can be coated with a non-conductive material having liquid permeability.

In the hydrogen charging device, at least one of vibration applying means that applies vibration to the test specimen, or pulsation applying means that pulsates the electrolytic solution flowing in the through-hole can be included.

Next, a rotating bending fatigue testing device includes the features of claim 5.

In the rotating bending fatigue testing machine, an anode material accommodated in the through-hole of the test specimen gripped by the tubular shaft members, in a state of being separated from an inner peripheral surface of the through-hole, and a direct-current power source that applies a minus voltage to the test specimen, and a plus voltage to the anode material is provided.

In the rotating bending fatigue testing machine, the circulation path placed in the tubular shaft members and the through-hole of the test specimen can be caused to communicate with each other by a rotating joint.

In the rotating bending fatigue testing machine, a direct current can be supplied to each of the test specimen and the anode material from the direct-current power source via a brush.

### Advantageous Effects of Invention

According to the present invention, it is possible to provide a hydrogen charging device that can efficiently charge hydrogen into a test specimen with a simple structure, and a rotating bending fatigue testing machine that can appropriately evaluate hydrogen embrittlement properties of a material, and can rationally select a material usable in a hydrogen environment.

### Brief Description of Drawings

[Figure 1] Figure 1 is a view showing a schematic configuration of a hydrogen charging device according to an embodiment of the present invention.
[Figure 2] Figure 2 is a partially omitted enlarged sectional view of a region shown by an arrow A in Figure 1.
[Figure 3] Figure 3 is a partially omitted front view showing a rotating bending fatigue testing machine according to the embodiment of the present invention.
[Figure 4] Figure 4 is a partially omitted vertical sectional view of a region shown by an arrow B in Figure 3.
[Figure 5] Figure 5 is a partially omitted enlarged view of a region shown by an arrow C in Figure 4.
[Figure 6] Figure 6 is a view showing a schematic configuration of a hydrogen charging device according to another embodiment.
[Figure 7] Figure 7 (not covered by the subject-matter of the claims) is a partially omitted vertical sectional view showing a main part of a rotating bending fatigue test machine according to another embodiment.

### Description of Embodiment

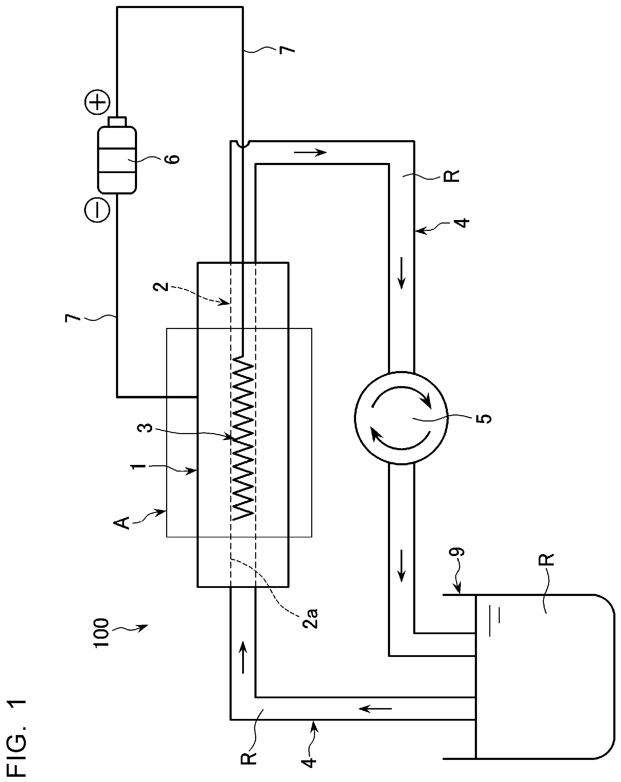

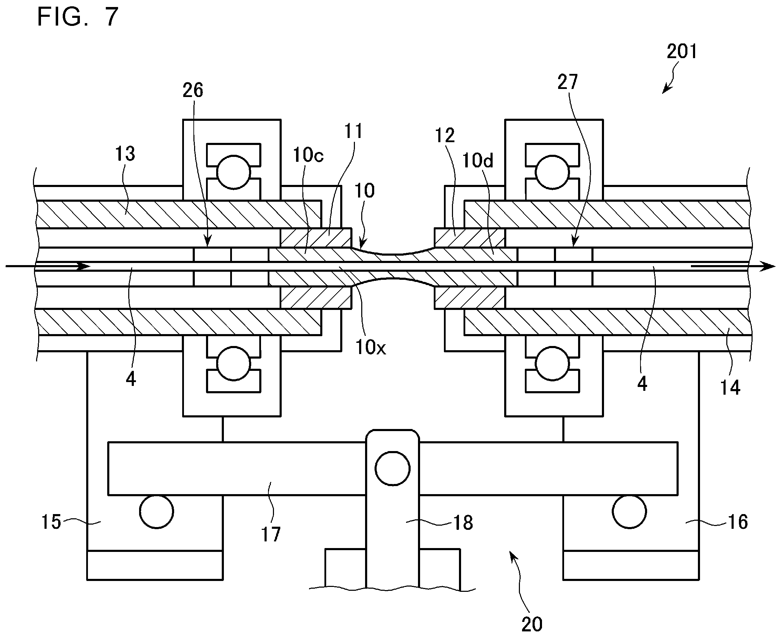

Hereinafter, hydrogen charging devices 100 and 101 and rotating bending fatigue test machines 200 and 201 according to embodiments of the present invention will be described based on Figure 1 to Figure 7 (wherein Figure 7 is not covered by the subject-matter of the claims).

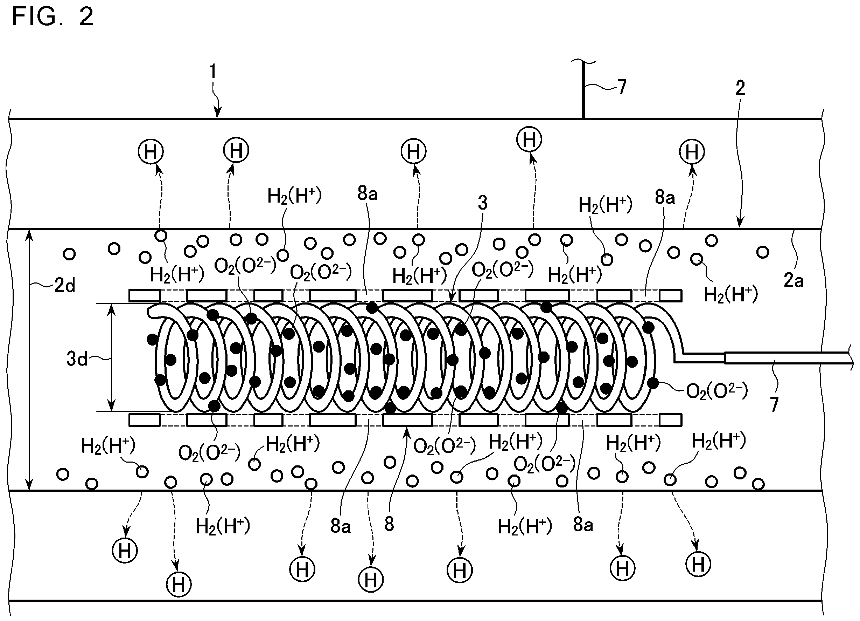

First, based on Figure 1 and Figure 2, the hydrogen charging device 100 will be described. As shown in Figure 1, the hydrogen charging device 100 includes an anode material 3 that can be accommodated in a through-hole 2 provided inside a test specimen 1, in a state of being separated from an inner peripheral surface 2a of the through-hole 2, a circulation path 4 and a liquid pump 5 that circulate and supply an electrolytic solution R into the through-hole 2, and a direct-current power source 6 that applies a minus voltage to the test specimen 1 and a plus voltage to the anode material 3. The circulation path 4 is formed of a flexible tube, and the specimen 1 and the anode material 3, and the direct-current power source 6 are connected by coated copper wires 7 respectively.

As shown in Figure 1, a relay tank 9 that temporarily stores the electrolytic solution R circulating in the circulation path 4 by the liquid pump 5 is disposed in the middle of the circulation path 4. As the electrolytic solution R, a dilute aqueous sodium hydroxide solution is used, but the electrolytic solution is not limited to this.

As shown in Figure 2, the anode material 3 is formed of a platinum wire material, but is not limited to this, and therefore can also be formed of a conductive wire material with a surface plated with platinum. The anode material 3 has a spiral shape entirely to increase a surface area thereof, and an outside diameter 3d of a spiral shape portion is smaller than an inside diameter 2d of the through-hole 2. A shape of the anode material 3 is not limited to the spiral shape, and a bar (not illustrated) or the like having a shape other than the spiral shape and made for the purpose of increasing the surface area can also be used.

An outer periphery of a portion having the spiral shape of the anode material 3 is coated with a non-conductive material 8 having corrosion resistance and liquid permeability. The non-conductive material 8 is a coated tube of a synthetic resin having a large number of liquid passage holes 8a, but the non-conductive material 8 is not limited to this, and therefore, reticulated coated tube (not illustrated) or the like having corrosion resistance and liquid permeability can also be used.

In the hydrogen charging device 100 shown in Figure 1, when a current is passed by applying a minus voltage to the test specimen 1 and a plus voltage to the anode material 3 by the direct-current power source 6 while circulating and supplying the electrolytic solution R into the through-hole 2 of the test specimen 1 via the circulation path 4 by the liquid pump 5, oxygen ions O²⁻ are attracted into the electrolytic solution R in a vicinity of the anode material 3, and hydrogen ions H+ are attracted into the electrolytic solution R in a vicinity of the inner peripheral surface 2a of the through-hole 2 of the test specimen 1, and the hydrogen ions H+ or hydrogen gas H₂ receive electrons and enter the test specimen 1 as hydrogen atoms H from the inner peripheral surface 2a of the through-hole 2, whereby the test specimen 1 is charged with hydrogen. A temperature and pH of the electrolytic solution R and the voltage and current applied by the direct-current power source 6 at this time can be controlled by control means (not illustrated).

Since the hydrogen charging device 100 performs hydrogen charge while circulating and supplying the electrolytic solution R into the through-hole 2 of the test specimen 1, hydrogen can be efficiently charged into the test specimen 1. In addition, since the hydrogen charging device 100 can be formed of the anode material 3, the electrolytic solution R, the circulation path 4, the liquid pump 5, the direct-current power source 6, the coated copper wire 7 and the like, and does not require a high-pressure gas container, a high-pressure gas conveyance path or the like, the structure is simple and inexpensive.

On the other hand, if vibration applying means (not illustrated) that applies vibration to the test specimen 1, or pulsation applying means (not illustrated) that pulsates the electrolytic solution R flowing in the through-hole 2 is provided in the hydrogen charging device 100, bubbles of hydrogen H₂ and oxygen O₂ that are generated in the electrolytic solution R in the through-hole 2 of the test specimen 1 can be discharged to outside the through-hole 2, and therefore, it is possible to prevent the bubbles of hydrogen H₂ and oxygen O₂ from staying on the inner peripheral surface 2a of the through-hole 2 and in the vicinity of the anode material 3 and inhibiting the electrochemical reaction.

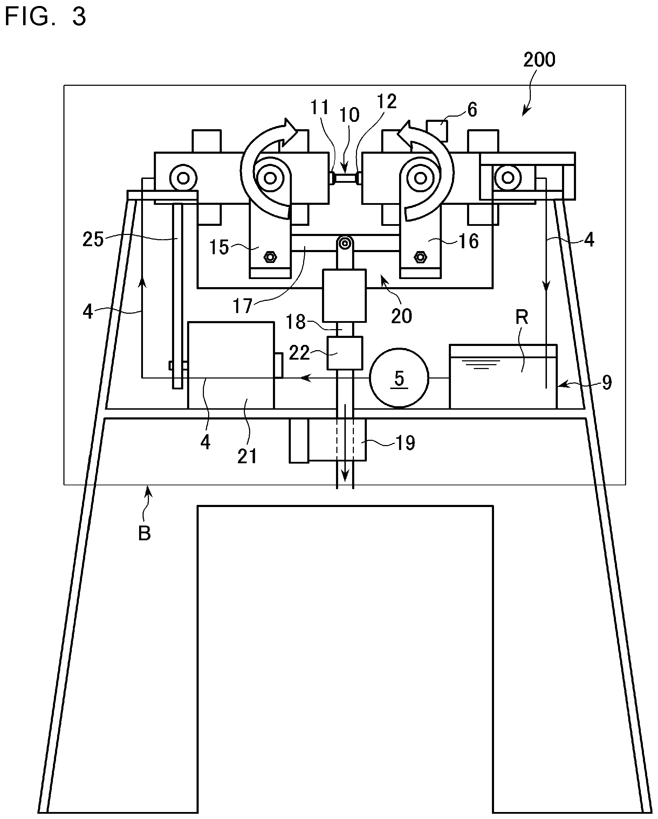

Next, based on Figure 3 to Figure 5, the rotating bending fatigue test machine 200 using the hydrogen charging device 100 shown in Figure 1 will be described. Note that in the portions configuring the rotating bending fatigue test machine 200 shown in Figure 3 to Figure 5, portions that are common to the portions configuring the hydrogen charging device 100 shown in Figure 1 are assigned with the same reference signs as the reference signs in Figure 1 and Figure 2, and explanation thereof may be omitted. Further, in Figure 3 to Figure 5, there are some portions where cross-hatching is not filled in order to ensure visibility of leader lines of the reference signs.

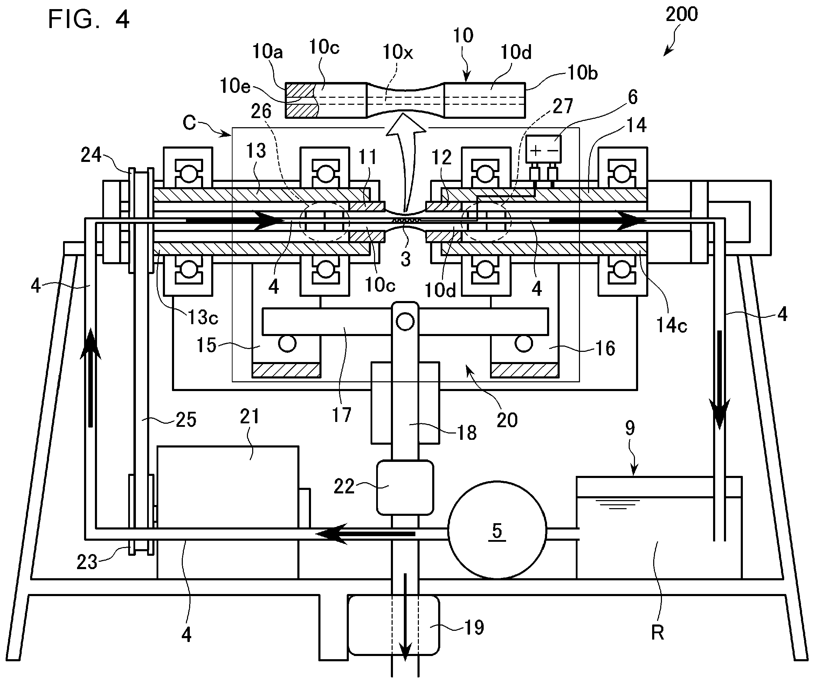

As shown in Figure 3 and Figure 4, the rotating bending fatigue testing machine 200 includes a pair of tubular shaft members 13 and 14 coaxially disposed to face each other to grip and rotate end portions 10c and 10d of the test specimen 10 having a through-hole 10x opening on both end surfaces 10a and 10b by chucks 11 and 12 respectively, bending means 20 that applies a bending moment to the test specimen 10, a motor 21 that is driving means that rotates the test specimen 10, the liquid pump 5 and the circulation path 4, and the direct-current power source 6.

The bending means 20 includes hanging members 15 and 16 that transmit a pulling-down force to the tubular shaft members 13 and 14 respectively, a horizontal connecting member 17 that connects lower side portions of the hanging members 15 and 16, a vertical connecting member 18 that transmits a pulling-down force to the horizontal connecting member 17, and a pulling-down mechanism 19 that applies a pulling-down force to the vertical connecting member 18. The pulling-down mechanism 19 has a function of forcefully applying a pulling-down load to the vertical connecting member 18, and includes a load gauge 22 that monitors the pulling-down load applied to the vertical connecting member 18.

A rotational force of the motor 21 is transmitted to the tubular shaft member 13 via pulleys 23 and 24 and a belt 25, and the tubular shaft member 14 rotates with the test specimen 10. Thereby, the test specimen 10 rotates in a state in which a bending moment is applied to the test specimen 10 by the bending means 20.

In the through-hole 10x of the test specimen 10 gripped by the chucks 11 and 12 of the tubular shaft members 13 and 14, the anode material 3 is accommodated in a state of being separated from an inner peripheral surface 10e of the through-hole 10x, and the electrolytic solution R can be circulated and supplied from an inside of the one tubular shaft member 13 into the other tubular shaft member 14 via the through-hole 10x of the test specimen 10 by the liquid pump 5 and the circulation path 4. A shape, a structure and the like of the anode material 3 accommodated in the through-hole 10x are similar to the shapes, structures and the like of the anode material 3 and the non-conductive material 8 accommodated in the through-hole 2 shown in Figure 2.

Note that if a hollow motor (not illustrated) is used instead of the motor 21, and the hollow motor is directly connected to the tubular shaft member 13, it is also possible to circulate and supply the electrolytic solution R via the inside of the tubular shaft members 13 and 14 while rotating the tubular shaft members 13 and 14 without aid of the pulleys 23 and 24 and the belt 25.

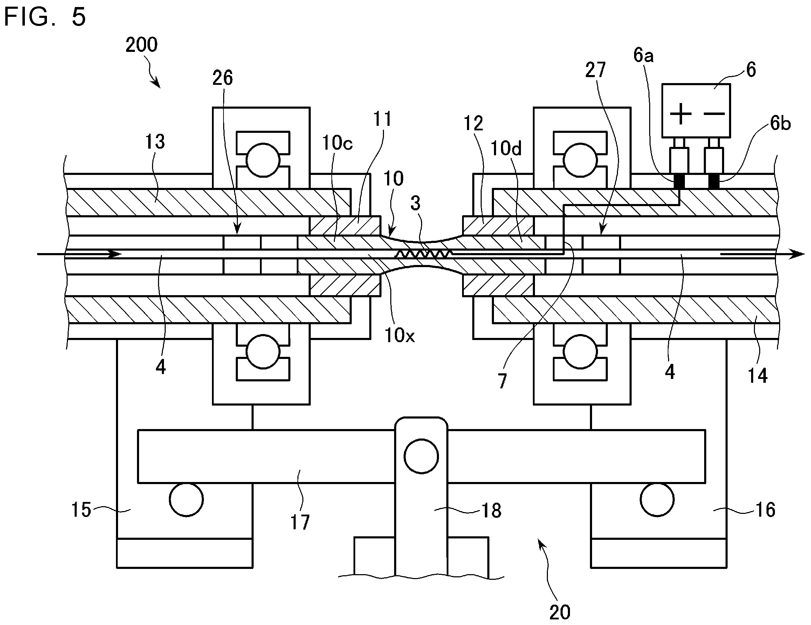

As shown in Figure 4 and Figure 5, the circulation path 4 placed in the one tubular shaft member 13 and an opening on an end portion 10c side of the through-hole 10x of the test specimen 10 are caused to communicate with each other by a rotary joint 26, and the circulation path 4 placed in the other tubular shaft member 14 and an opening on an end portion 10d side of the through-hole 10x of the test specimen 10 are caused to communicate with each other by a rotary joint 27. The rotary joints 26 and 27 are also referred to as rotating bearings and can cause the stationary circulation path 4 and the through-hole 10x of the rotating test specimen 10 to communicate with each other in a liquid-tight manner. Installation positions of the rotary joints 26 and 27 are not limited to the end portions 10c and 10d of the test specimen 10, but may be any places as long as they are in the middle of the insides of the tubular shaft members 13 and 14, and therefore, the rotary joints 26 and 27 may also be installed, for example, in end portions 13c and 14c (see Figure 4) of the tubular shaft members 13 and 14.

The direct-current power source 6 can apply a minus voltage to the test specimen 10, and a plus voltage to the anode material 3, and a direct current is supplied to the anode material 3 and the test specimen 10 via brushes 6a and 6b respectively.

In the rotating bending fatigue testing machine 200 shown in Figure 3 to Figure 5, it is possible to perform the rotating bending fatigue test of the test specimen 10 while efficiently charging hydrogen to the test specimen 10, by applying a minus voltage to the test specimen 10 and a plus voltage to the anode material 3 by the direct-current power source 6 while circulating and supplying the electrolytic solution R into the through-hole 10x of the test specimen 10 by operating the liquid pump 5, and rotating the test specimen 10 by the motor 21 in the state where a bending moment is applied to the test specimen 10 by the pulling-down mechanism 19.

Accordingly, it is possible to appropriately evaluate the hydrogen embrittlement properties of the material (test specimen 10) and rationally select the material usable in the hydrogen environment, by performing the rotating bending fatigue test of the test specimen 10 by using the rotating bending fatigue testing machine 200. Further, the rotating bending fatigue testing machine 200 has a simple structure, and is relatively small and lightweight, inexpensive, highly reliable, excellent in quietness, and low in running cost and maintenance cost.

Note that in the rotating bending fatigue testing machine 200, it is desirable to conduct a test with displacement control for prevention of leakage of the electrolytic solution R when the test specimen 10 is broken and as a countermeasure against earthquake. In this case, it is desirable to conduct the test by monitoring with the load gauge 22 and adjusting the displacement amount using closed loop control.

The use of the hydrogen charging device 100 shown in Figure 1 and Figure 2 is not limited to the rotating bending fatigue testing machine 200 shown in Figure 4 to Figure 5, and therefore, it can be widely used in fatigue testing machines other than the rotating bending fatigue testing machine 200, for example, tension/compression fatigue testing machines, cyclic bending fatigue testing machines, cyclic torsion fatigue testing machines, combined bending/torsion fatigue testing machines and the like.

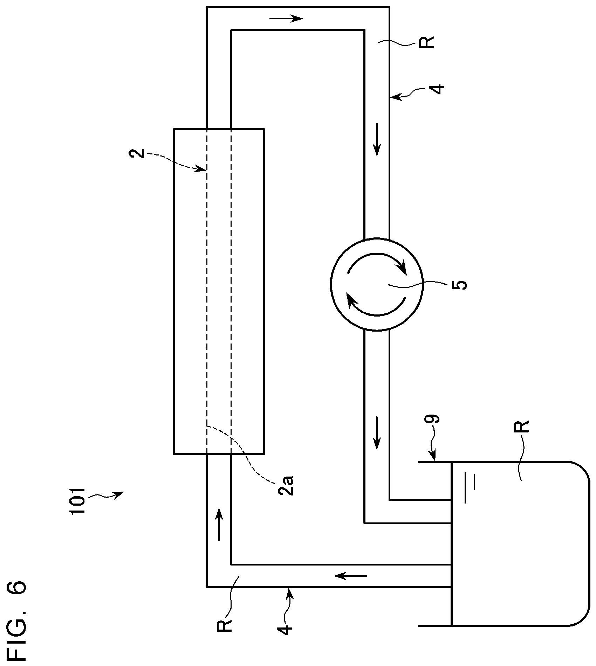

Next, based on Figure 6 and Figure 7 (Figure 7 is not covered by the subject-matter of the claims), a hydrogen charging device 101 and a rotating bending fatigue testing machine 201 according to another embodiment will be described. Note that in components of the hydrogen charging device 101 and the rotating bending fatigue testing machine 201, portions common to those of the hydrogen charging device 100 and the rotating bending fatigue testing machine 200 are assigned with the same reference signs as the reference signs in Figure 1 to Figure 5 and explanation thereof is omitted.

As shown in Figure 6, the hydrogen charging device 101 includes a circulation path 4 and a liquid pump 5 that circulate and supply an electrolytic solution R into a through-hole 2 provided inside a test specimen 1. The circulation path 4 is formed of a flexible tube, and in the middle of the circulation path 4, a relay tank 9 that temporarily stores the electrolytic solution R circulating in the circulation path 4 by the liquid pump 5 is disposed. As the electrolytic solution R, an ammonium thiocyanate aqueous solution is used, but the electrolytic solution R is not limited to this.

In the hydrogen charging device 101 shown in Figure 6, when the electrolytic solution R is circulated and supplied into the through-hole 2 of the test specimen 1 via the circulation path 4 by the liquid pump 5, hydrogen is generated by a chemical reaction, and hydrogen atoms H enter the test specimen 1 from an inner peripheral surface 2a of the through-hole 2, whereby the test specimen 1 is charged with hydrogen. A temperature and pH of the electrolytic solution R at this time can be controlled by control means (not illustrated).

The hydrogen charging device 101 performs hydrogen charge while circulating and supplying the electrolytic solution R into the through-hole 2 of the test specimen 1, and therefore can efficiently charge hydrogen into the test specimen 1. Further, since the hydrogen charging device 101 can be formed of the electrolytic solution R, the circulation path 4, the liquid pump 5 and the like, and does not require a high-pressure gas container, a high-pressure gas conveyance path or the like, the hydrogen charging device 101 is simple in structure and inexpensive.

Next, based on Figure 7 (not covered by the subject-matter of the claims), the rotating bending fatigue testing machine 201 using the hydrogen charging device 101 shown in Figure 6 will be described. Figure 7 is a partially omitted vertical sectional view showing a main part of the rotating bending fatigue testing machine 201 and shows a region corresponding to a region shown in Figure 5 in the aforementioned rotating bending fatigue testing machine 200 (see Figure 4). Further, in Figure 7, there are some portions where cross-hatching is not filled in order to ensure visibility of leader lines of the reference signs.

The rotating bending fatigue testing machine 201 shown in Figure 7 (not covered by the subject-matter of the claims) has a structure in which the anode material 3, the direct-current power source 6, the coated copper wire 7 and the brushes 6a and 6b are eliminated from the rotating bending fatigue testing machine 200 shown in Figure 3 to Figure 5, and the structures, functions and the like of the other portions are the same as those of the rotating bending fatigue testing machine 200.

In the rotating bending fatigue testing machine 201 shown in Figure 7 (not covered by the subject-matter of the claims), it is possible to perform a rotating bending fatigue test of the test specimen 10 while efficiently charging hydrogen to the test specimen 10 by rotating the test specimen 10 by a motor 21 (see Figure 4) in a state where a bending moment is applied to the test specimen 10 by a pulling-down mechanism 19 (see Figure 4) while circulating and supplying the electrolytic solution R into the through-hole 10x of the test specimen 10 by operating the liquid pump 5.

By performing the rotating bending fatigue test of the test specimen 10 using the rotating bending fatigue testing machine 201, It is possible to appropriately evaluate hydrogen embrittlement properties of the material (test specimen 10) and rationally select the material usable in a hydrogen environment. The rotating bending fatigue testing machine 201 has a simple structure, is relatively small and lightweight, inexpensive and highly reliable, and is also excellent in quietness, and low in running cost and maintenance cost.

.

### Industrial Applicability

The present invention can be widely used in the industrial fields that require appropriate evaluation of hydrogen embrittlement properties of materials and rational selection of the materials usable in hydrogen environments.

### Reference Signs List

1, 10 test specimen
2, 10x through-hole
2a, 10e inner peripheral surface
2d inside diameter
3 anode material
3d outside diameter
4 circulation path
5 liquid pump
6 direct-current power source
6a, 6b brush
7 coated copper wire
8 non-conductive material
8a liquid passage hole
9 relay tank
10a, 10b end surface
10c, 10d, 13c, 14c end portion
11, 12 chuck
13, 14 tubular shaft member
15, 16 hanging member
17 horizontal connecting member
18 vertical connecting member
19 pulling-down mechanism
20 bending means
21 motor
22 load gauge
23, 24 pulley
25 belt
26, 27 rotary joint (rotating bearing)
100, 101 hydrogen charging device
200, 201 rotating bending fatigue testing machine
H hydrogen atom
H₂ hydrogen gas
H+ hydrogen ion
O₂ oxygen gas
O²⁻ oxygen ion

## Claims

1. A hydrogen charging device (100, 101), comprising:
a circulation path (4) and a liquid pump (5) that circulate and supply an electrolytic solution into a through-hole (2, 10x) provided inside a test specimen (1, 10);
a direct-current power source (6) that applies a minus voltage to the test specimen (1, 10), and a plus voltage to an anode material (3),
**characterized in that**
the anode material (3) is capable of being accommodated in the through-hole (2, 10x) provided inside the test specimen (1, 10), in a state of being separated from an inner peripheral surface (2a, 10e) of the through-hole (2, 10x).

2. The hydrogen charging device (100, 101) according to claim 1, wherein at least a part of the anode material (3) has a spiral shape with an outside diameter (3d) smaller than an inside diameter (2d) of the through-hole (2, 10x).

3. The hydrogen charging device (100, 101) according to claim 2, wherein at least a part of an outer periphery of the part having the spiral shape of the anode material (3) is coated with a non-conductive material (8) having liquid permeability.

4. The hydrogen charging device (100, 101) according to any one of claims 1 to 3, comprising at least one of vibration applying means that applies vibration to the test specimen (1, 10), or pulsation applying means that pulsates the electrolytic solution flowing in the through-hole (2, 10x).

5. A rotating bending fatigue testing machine (200), comprising:
a pair of tubular shaft members (13, 14) coaxially disposed to face each other to rotate a test specimen (1, 10) in a state of respectively gripping end portions (10c, 10d, 13c, 14c) of the test specimen (1, 10) having a through-hole (2, 10x) opening on both end surfaces (10a, 10b); and
bending means (20) that applies a bending moment to the test specimen (1, 10);
driving means that rotates the test specimen (1, 10) in a state where a bending moment is applied by the bending means (20) ;
**characterized in that**
the rotating bending fatigue testing machine (200) further comprises
a liquid pump (5) and a circulation path (4) that circulate and supply an electrolytic solution from one of the tubular shaft members (13, 14) to another one of the tubular shaft members (13, 14) via the through-hole (2, 10x) of the test specimen (1, 10) gripped by the tubular shaft members (13, 14); and
an anode material (3) accommodated in the through-hole (2, 10x) of the test specimen (1, 10) gripped by the tubular shaft members (13, 14) in a state of being separated from an inner peripheral surface (2a, 10e) of the through-hole (2, 10x), and a direct-current power source (6) that applies a minus voltage to the test specimen (1, 10), and a plus voltage to the anode material (3).

6. The rotating bending fatigue testing machine (200) according to claim 5, wherein the circulation path (4) placed in the tubular shaft members (13, 14) and the through-hole (2, 10x) of the test specimen (1, 10) are caused to communicate with each other by a rotary joint (26, 27).

7. The rotating bending fatigue testing machine (200) according to claim 5, wherein electric power is supplied to each of the test specimen (1, 10) and the anode material (3) from the direct-current power source (6) via a brush (6a, 6b).

## Patentansprüche

1. Wasserstoffladevorrichtung (100, 101) umfassend:
einen Zirkulationsweg (4) und eine Flüssigkeitspumpe (5), die eine Elektrolytlösung in ein Durchgangsloch (2, 10x), das innerhalb eines Prüfstücks (1, 10) angeordnet ist, zirkulieren und zuführen;
eine Gleichstromquelle (6), die eine Minusspannung an das Prüfstück (1, 10) und eine Plusspannung an ein Anodenmaterial (3) ausübt,
**dadurch gekennzeichnet, dass**
das Anodenmaterial (3) in dem Durchgangsloch (2, 10x), das innerhalb des Prüfstücks (1, 10) angeordnet ist, untergebracht werden kann, in einem Zustand, in dem es von einer inneren Umfangsfläche (2a, 10e) des Durchgangslochs (2, 10x) getrennt ist.

2. Wasserstoffladevorrichtung (100, 101) gemäß Anspruch 1, wobei mindestens ein Teil des Anodenmaterials (3) eine spiralförmige Form mit einem Außendurchmesser (3d) hat, der kleiner ist als ein Innendurchmesser (2d) des Durchgangslochs (2, 10x).

3. Wasserstoffladevorrichtung (100, 101) gemäß Anspruch 2, wobei mindestens ein Teil eines Außenumfangs des Teils, das die spiralförmige Form des Anodenmaterials (3) hat, mit einem nichtleitenden Material (8) beschichtet ist, das Flüssigkeitsdurchlässigkeit aufweist.

4. Wasserstoffladevorrichtung (100, 101) gemäß einem der Ansprüche 1 bis 3, umfassend mindestens eines von Vibrationsanwendemitteln, das Vibration auf das Prüfstück (1, 10) anwendet, oder Pulsationsanwendemitteln, die die Elektrolytlösung, die im Durchgangsloch (2, 10x) fließt, pulsieren lässt.

5. Rotationsbiegeermüdungsprüfmaschine (200) umfassend:
ein Paar röhrenförmiger Schaftelemente (13, 14), die koaxial zueinander angeordnet sind, um ein Prüfstück (1, 10) in einem Zustand zu drehen, in dem sie jeweils Endabschnitte (10c, 10d, 13c, 14c) des Prüfstücks (1, 10) greifen, das eine Durchgangsloch (2, 10x)-Öffnung an beiden Endflächen (10a, 10b) hat, und
Biegemittel (20), die ein Biegemoment auf das Prüfstück (1, 10) ausüben;
eine Antriebsvorrichtung, die das Prüfstück (1, 10) in einem Zustand dreht, in dem ein Biegemoment durch die Biegemittel (20) ausgeübt wird;
**dadurch gekennzeichnet, dass**
die Rotationsbiegeermüdungsprüfmaschine (200) außerdem umfasst:
eine Flüssigkeitspumpe (5) und einen Zirkulationsweg (4), die eine Elektrolytlösung von einem der röhrenförmigen Schaftelemente (13, 14) zu einem anderen der röhrenförmigen Schaftelemente (13, 14) über das Durchgangsloch (2, 10x) des von den röhrenförmigen Schaftelementen (13, 14) gegriffenen Prüfstücks (1, 10) zirkulieren und zuführen; und
ein Anodenmaterial (3), das in dem Durchgangsloch (2, 10x) des von den röhrenförmigen Schaftelementen (13, 14) gegriffenen Prüfstücks (1, 10) untergebracht ist, in einem Zustand, in dem es von einer inneren Umfangsfläche (2a, 10e) des Durchgangslochs (2, 10x) getrennt ist, und eine Gleichstromquelle (6), die eine Minusspannung an das Prüfstück (1, 10) und eine Plusspannung an das Anodenmaterial (3) ausübt.

6. Rotationsbiegeermüdungsprüfmaschine (200) gemäß Anspruch 5, wobei der in den röhrenförmigen Schaftelementen (13, 14) platzierte Zirkulationsweg (4) und das Durchgangsloch (2, 10x) des Prüfstücks (1, 10) durch eine Drehverbindung (26, 27) miteinander in Verbindung gebracht werden.

7. Rotationsbiegeermüdungsprüfmaschine (200) gemäß Anspruch 5, wobei jedem der Prüfstücke (1, 10) und dem Anodenmaterial (3) elektrische Energie von der Gleichstromquelle (6) über eine Bürste (6a, 6b) zugeführt wird.

## Revendications

1. Dispositif de charge d'hydrogène (100, 101), comprenant :
une voie de circulation (4) et une pompe à liquide (5) qui font circuler et fournissent une solution électrolytique dans un trou traversant (2, 10x) prévu à l'intérieur d'un échantillon d'essai (1, 10) ;
une source d'énergie en courant continu (6) qui applique une tension négative à l'échantillon d'essai (1, 10) et une tension positive à un matériau d'anode (3),
**caractérisé en ce que**
le matériau d'anode (3) peut être logé dans le trou traversant (2, 10x) prévu à l'intérieur de l'échantillon d'essai (1, 10), dans un état étant séparé d'une surface périphérique intérieure (2a, 10e) du trou traversant (2, 10x).

2. Dispositif de charge d'hydrogène (100, 101) selon la revendication 1, dans lequel au moins une partie du matériau d'anode (3) présente une forme en spirale avec un diamètre extérieur (3d) inférieur à un diamètre intérieur (2d) du trou traversant (2, 10x).

3. Dispositif de charge d'hydrogène (100, 101) selon la revendication 2, dans lequel au moins une partie d'une périphérie extérieure de la partie présentant la forme en spirale du matériau d'anode (3) est revêtue d'un matériau non conducteur (8) présentant une perméabilité aux liquides.

4. Dispositif de charge d'hydrogène (100, 101) selon l'une quelconque des revendications 1 à 3, comprenant au moins un élément parmi des moyens d'application de vibrations qui appliquent des vibrations à l'échantillon d'essai (1, 10) ou des moyens d'application de pulsations qui font pulser la solution électrolytique s'écoulant dans le trou traversant (2, 10x).

5. Machine d'essai de fatigue par flexion rotative (200), comprenant :
une paire d'éléments d'arbre tubulaires (13, 14) disposés coaxialement pour se faire face mutuellement afin de mettre en rotation un échantillon d'essai (1, 10) dans un état de préhension respective de parties d'extrémité (10c, 10d, 13c, 14c) de l'échantillon d'essai (1, 10) présentant un trou traversant (2, 10x) s'ouvrant sur les deux surfaces d'extrémité (10a, 10b) ; et
des moyens de flexion (20) qui appliquent un moment de flexion à l'échantillon d'essai (1, 10) ;
des moyens de pilotage qui mettent en rotation l'échantillon d'essai (1, 10) dans un état où un moment de flexion est appliqué par les moyens de flexion (20) ;
**caractérisée en ce que**
la machine d'essai de fatigue par flexion rotative (200) comprend en outre
une pompe à liquide (5) et une voie de circulation (4) qui font circuler et alimentent une solution électrolytique d'un des éléments d'arbre tubulaires (13, 14) à un autre des éléments d'arbre tubulaires (13, 14) par l'intermédiaire du trou traversant (2, 10x) de l'échantillon d'essai (1, 10) saisi par les éléments d'arbre tubulaires (13, 14) ; et
un matériau d'anode (3) logé dans le trou traversant (2, 10x) de l'échantillon d'essai (1, 10) saisi par les éléments d'arbre tubulaires (13, 14) dans un état étant séparé d'une surface périphérique intérieure (2a, 10e) du trou traversant (2, 10x), et une source d'énergie en courant continu (6) qui applique une tension négative à l'échantillon d'essai (1, 10) et une tension positive au matériau d'anode (3).

6. Machine d'essai de fatigue par flexion rotative (200) selon la revendication 5, dans laquelle la voie de circulation (4) placée dans les éléments d'arbre tubulaires (13, 14) et le trou traversant (2, 10x) de l'échantillon d'essai (1, 10) sont amenés à communiquer l'un avec l'autre par un joint rotatif (26, 27).

7. Machine d'essai de fatigue par flexion rotative (200) selon la revendication 5, dans laquelle l'énergie électrique est fournie à chacun parmi l'échantillon d'essai (1, 10) et le matériau d'anode (3) à partir de la source d'énergie en courant continu (6) par l'intermédiaire d'une brosse (6a, 6b).
